**Europäisches Patentamt**

**European Patent Office**

**Office européen des brevets**

(19)

(11) Veröffentlichungsnummer : **0 357 968 B1**

# EUROPÄISCHE PATENTSCHRIFT

(12)

(45) Veröffentlichungstag der Patentschrift :
**27.11.91 Patentblatt 91/48**

(51) Int. Cl.$^5$ : **F16G 3/02**

(21) Anmeldenummer : **89114426.3**

(22) Anmeldetag : **04.08.89**

(54) **Drahtgewebeband.**

(30) Priorität : **19.08.88 DE 3828210**

(43) Veröffentlichungstag der Anmeldung :
**14.03.90 Patentblatt 90/11**

(45) Bekanntmachung des Hinweises auf die
Patenterteilung :
**27.11.91 Patentblatt 91/48**

(84) Benannte Vertragsstaaten :
**AT BE CH ES FR GB IT LI LU NL SE**

(56) Entgegenhaltungen :
**EP-A- 0 234 197**
**FR-A- 1 322 314**
**GB-A- 776 509**
**US-A- 4 344 209**

(73) Patentinhaber : **GKD GEBR. KUFFERATH**
**GMBH & CO. KG**
**Metallweberstrasse 46**
**W-5160 Düren (DE)**

(72) Erfinder : **Graff, Wilhelm**
**Schwalbenweg 1**
**W-5160 Düren (DE)**

(74) Vertreter : **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1 (DE)**

EP 0 357 968 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Drahtgewebeband, insbesondere für Fördereinrichtungen, Siebbandpressen od.dgl., dessen Bandenden Ösen aufweisen, die durch einen Sicherungsstreifen aus einer sich verfestigenden Masse gesichert sind und durch welche langgestreckte Verbindungselemente hindurchgesteckt sind, welche das Drahtgewebeband an seinen Bandenden zu einem endlosen Band miteinander verbinden.

Es ist ein Förderband aus Sack- oder Gitterleinen dieser Art bekannt (GB-B 776509), dessen miteinander zu verbindende Bandränder durch ein festes, elastisches Imprägniermaterial verstärkt sind, in dem die Ösen für die Stecknaht eingebettet sind und das zu den Bandrändern hin dicker wird, damit die Ösen die Antriebs- und Umlenkwalzen des Förderers nicht berühren und hierbei verschleißen, wenn die Stecknaht des Bandes über diese Walzen läuft.

Gewebebänder, die für Fördereinrichtungen benutzt werden, biegen sich infolge der Belastung durch das Fördergut in der Mitte mehr durch als an ihren Rändern, da die Beanspruchung der mittleren Drähte größer ist als die der Randdrähte. Hierdurch kommt es in der Mitte des Gewebebandes zu einer größeren Längsdehnung als in den Randbereichen, so daß sich das Band in seiner Mitte ausbaucht und sich an den Umlenkwalzen der Maschine vorwölbt. Hierdurch entsteht im Band im Bereich der Quernaht ein Knick parallel zur Laufrichtung des Bandes, der einen erhöhten Verschleiß und ein Reißen des Gewebebandes im Bereich der Naht zur Folge hat. Dieser Nachteil konnte bislang nur dadurch vermieden werden, daß das Drahtgewebeband anstatt mit einer Stecknaht mit einer Webnaht zu einem endlosen Band verbunden wurde. Die Herstellung einer Webnaht ist jedoch erheblich aufwendiger und ein endloses Band mit Webnaht kann nur bei Fördermaschinen verwendet werden, die durch ihre Bauart für einen seitlichen Einbau des Gewebebandes geeignet sind.

Aufgabe der Erfindung ist es, ein Knicken des Bandes im Bereich einer Querstecknaht und die damit verbundene Schädigung des Drahtgewebebandes zu vermeiden, ohne auf die Vorteile dieser Nahtart bei der Montage des Bandes verzichten zu müssen.

Diese Aufgabe wird mit der Erfindung dadurch gelöst, daß die Bandenden auf einer begrenzten Länge zusätzlich durch Versteifungsstreifen aus einer sich verfestigenden Masse versteift sind, die mindestens einen Teil der Maschen des Gewebes ausfüllt, wodurch Relativbewegungen der Gewebedrähte verhindert werden.

Durch die Versteifungsstreifen können sich die Gewebedrähte in diesem Bereich nicht mehr gegeneinander verschieben oder verdrehen, sondern liegen in einem starren Verbund nebeneinander. Die Bandenden bleiben dadurch immer gerade und parallel zueinander und ein Aufwerfen des Gewebebandes in der Mitte der Bandenden wird vermieden.

Die sich verfestigende Masse, aus dem die Versteifungsstreifen bestehen, ist zweckmäßig ein Zwei-Komponentenkleber auf Polyurethanbasis, der die einzelnen Gewebedrähte zuverlässig miteinander verklebt, aber dennoch so elastisch bleibt, daß er auch bei starker Biegung, z.B. an den Umlenkrollen einer Maschine nicht bricht.

Ein großflächiger Auftrag des Klebers würde die Flexibilität des Bandes in den Nahtbereichen zu stark herabsetzen, so daß es an den Übergangsstellen zwischen versteiftem und nicht versteiftem Gewebe zum Bruch kommen könnte. Es ist daher sinnvoll, daß die Versteifungsstreifen in dem Gewebe ein Gitter mit dreieckförmigen Gefachen bilden. Bei einer anderen Ausführungsform der Erfindung können die Versteifungsstreifen in dem Drahtgewebeband auch Wellenlinien bilden. Ein weiterer Vorteil dieser Anordnung ist es, daß das Drahtgewebeband auch im Bereich seiner Bandenden weitgehend durchlässig bleibt.

Zur gleichmäßigen Längskraftübertragung ist es sinnvoll, wenn die Versteifungsstreifen symmetrisch zur Längsmittelachse des Drahtgewebebandes angeordnet sind. Um auch bei sehr hohen Zugbelastungen auf das Gewebeband die Versteifung der Endbereiche des Gewebebandes zu gewährleisten, ist es zweckmäßig, die Versteifungsstreifen von der Rückseite des Gewebebandes mit einer aus sich verfestigender Masse bestehenden Aufdickung zu versehen.

Weitere Merkmale und Vorteile der Erfindung ergeben sich aus der folgenden Beschreibung einer bevorzugten Ausführungsform und den dazugehörigen Zeichnungen. Es zeigt :

Fig. 1 ein Drahtgewebeband der Erfindung im Bereich seiner Bandenden in einer Aufsicht, wobei die Versteifungsstreifen dreieckförmige Gefache bilden,

Fig. 2 einen Querschnitt nach Fig. 1 längs der Linie II-II und

Fig. 3 eine andere Ausführung der Versteifungsstreifen in einer der Fig. 1 entsprechenden Darstellung.

In den Zeichnungen bezeichnet 10 ein Drahtgewebeband, an dessen Bandenden 11 Ösen 12 angeklammert und zusätzlich durch einen Sicherungsstreifen 13 aus Kunststoff gesichert sind. Ein Stab 14 verbindet die Bandenden 11, der abwechselnd durch eine Öse 12 des einen Bandendes 11 und durch eine Öse 12 des anderen Bandendes 11 gesteckt ist. Der Stab 14 ist an beiden Enden 15 und 16 abgebogen und gegen Herausgleiten aus den Ösen 12 gesichert.

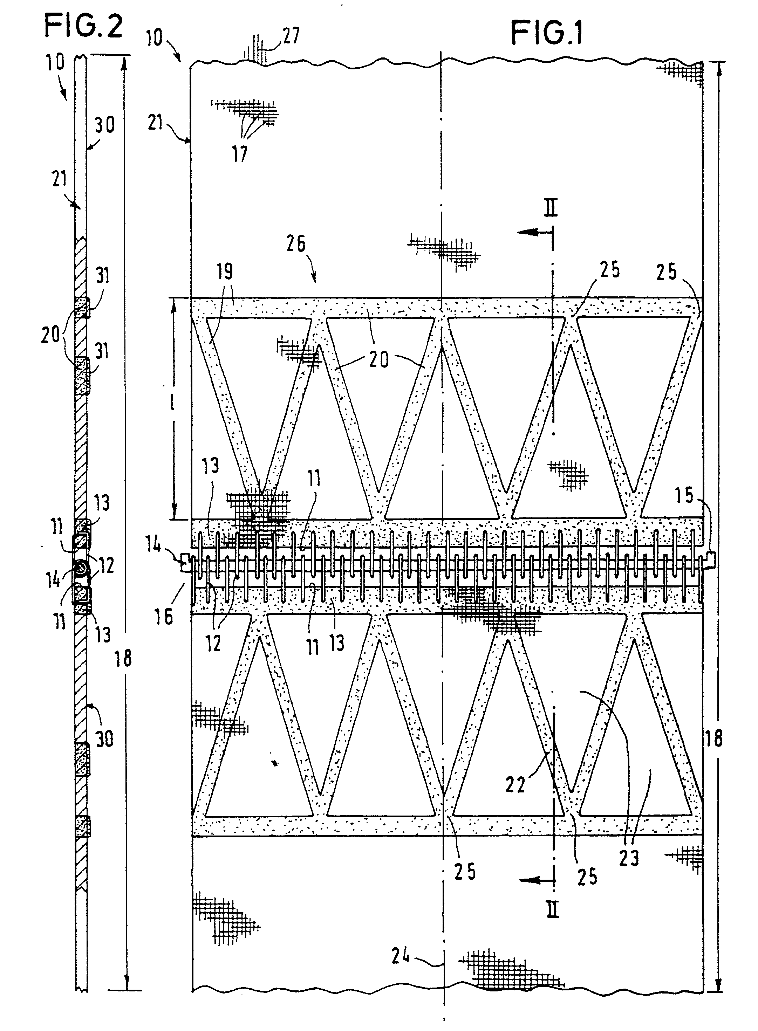

Bei der in Fig. 1 dargestellten Ausführungsform sind an den Bandenden 11 Versteifungsstreifen 20 angeordnet, die in dem Gewebe 21 ein Gitter 22 mit dreieckförmigen Gefachen 23 bilden. Im Bereich dieser Versteifungsstreifen 20, die sich von den Bandenden 11 über eine Länge 1 erstrecken, sind die Moschen 17 mit einer sich verfestig enden Masse 19 aus einem in verfestigtem Zustand noch biegsamen Kunststoff, z.B. einem Zwei-Komponenten-Kleber auf Polyurethanbasis, ausgefüllt.

Die schräg zur Längsrichtung des Bandes verlaufenden Versteifungsstreifen 20 sind symmetrisch zur Längsmittelachse 24 angeordnet und werden an ihren an den Bandenden 11 zusammenstoßenden Eckpunkten 25 von einem die Ösen 12 sichernden Sicherungsstreifen 13 aus der gleichen, sich verfestigenden Masse miteinander verbunden. Auf der den Bandenden 11 abgewandten Seite verbindet ein weiterer, etwa senkrecht zur Längsmittelachse 24 des Drahtgewebebandes 10 verlaufender Versteifungsstreifen 20 aus Kunststoff die Eckpunkte 25 der von den Versteifungsstreifen 20 gebildeten Dreiecke. Das so entstandene, ebene Fachwerk 26 aus sich verfestigen der Masse im Inneren des Gewebes versteift das Drahtgewebeband 10 in seinen Endbereichen 18, indem es Relativbewegungen der Gewebedrähte 27 im Bereich der Versteifungsstreifen 20 verhindert.

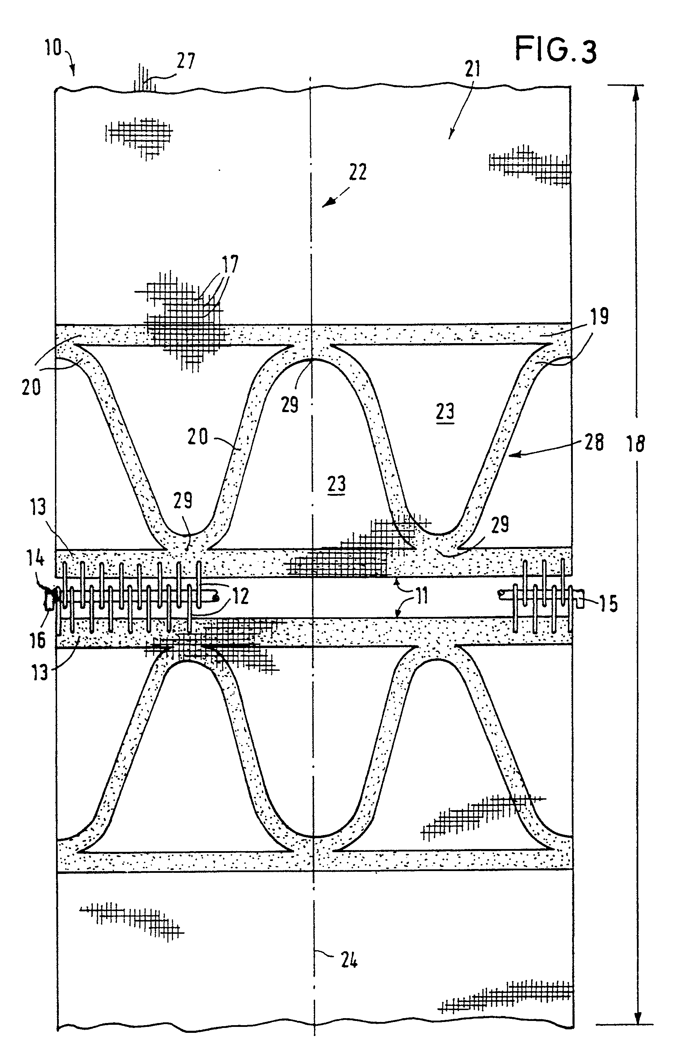

Die gleiche Wirkung wird auch bei der in Fig. 3 gezeigten Ausführungsform erzielt. Hier bilden die Versteifungsstreifen 20 in den Endbereichen 18 des Drahtgewebebandes 10 Wellenlinien 28, die an ihren Scheitelpunkten 29 durch den Sicherungsstreifen 13 bzw. durch senkrecht zur Längsmittelachse 24 verlaufende Versteifungsstreifen 20 miteinander verbunden sind.

Wie aus Fig. 2 ersichtlich ist, sind die Versteifungsstreifen 20 auf der Rückseite 30 des Drahtgewebebandes 10 zusätzlich mit einer Aufdickung 31 aus sich verfestigender Masse 19 versehen, die eine zusätzliche Verstärkung darstellt und den Verschleiß an den Bandenden herabsetzt.

## Patentansprüche

1. Drahtgewebeband, insbesondere für Fördereinrichtungen, Siebbandpressen od.dgl., dessen Bandenden (11) Ösen (12) aufweisen, die durch einen Sicherungsstreifen (13) aus einer sich verfestigenden Masse gesichert sind und durch welche langgestreckte Verbindungselemente (14) hindurchgesteckt sind, welche das Drahtgewebeband an seinen Bandenden (11) zu einem endlosen Band miteinander verbinden, **dadurch gekennzeichnet**, daß die Bandenden (11) auf einer begrenzten Länge (1) zuzätzlich durch Versteifungsstreifen (20) aus einer sich verfestigenden Masse (19) versteift sind, die mindestens einen Teil der Maschen (17) des Gewebes (21) ausfüllt, wodurch Relativbewegungen der Gewebedrähte (27) verhindert werden.

2. Drahtgewebeband nach Anspruch 1, **dadurch gekennzeichnet**, daß die sich verfestigende Masse (19) ein Zwei-Komponenten-Kleber auf Polyurethanbasis ist.

3. Drahtgewebeband nach Anspruch 1 oder 2, **dadurch gekennzeichnet**, daß die Versteifungsstreifen (20) ein Gitter (22) mit dreieckförmigen Gefachen (23) in dem Gewebe (21) bilden.

4. Drahtgewebeband nach einem der Ansprüche 1 bis 3, **dadurch gekennzeichnet**, daß die Versteifungsstreifen (20) im Drahtgewebeband (10) Wellenlinien (28) bilden.

5. Drahtgewebeband nach einem der Ansprüche 1 bis 4, **dadurch gekennzeichnet**, daß die Versteifungsstreifen (20) symmetrisch zur Längsmittelachse (24) des Drahtgewebebandes (10) angeordnet sind.

6. Drahtgewebeband nach einem der Ansprüche 1 bis 5, **dadurch gekennzeichnet**, daß schräg oder wellenförmig verlaufende Versteifungsstreifen (20) an ihren Eckpunkten (25) bzw. Scheitelpunkten (29) durch quer verlaufende Versteifungsstreifen (20) miteinander verbunden sind.

7. Drahtgewebanband nach einem der Ansprüche 1 bis 6, **dadurch gekennzeichnet,** daß die Versteifungsstreifen (20) auf der Rückseite (30) des Drahtgewebebandes (10) mit einer Aufdickung (31) aus sich verfestigender Masse (19) versehen sind.

## Claims

1. Wire mesh belt, in particular for conveyor systems, screen belt presses or the like, whose belt ends (11) have eyes (12) which are secured by a securing strip (13) made of a solidifying compound, and through which elongated connecting elements (14) are inserted, connecting the wire mesh belt at its belt ends (11) to form an endless belt, **characterised in that** the belt ends (11) are additionally reinforced on a limited length (1) by reinforcement strips (20) of a solidifying compound (19) which fills at least a part of the meshes (17) of the screen (21), as a result of which relative movements of the screen wires (27) are prevented.

2. Wire mesh belt according to Claim 1, **characterised in that** the solidifying compound (19) is a two-component polyurethane-based adhesive.

3. Wire mesh belt according to Claim 1 or 2, **characterised in that** the reinforcement strips (20) form a lattice (22) with triangular compartments (23) in the screen (21).

4. Wire mesh belt according to any of Claims 1 to 3, **characterised in that** the reinforcement strips (20) form wavy lines (28) in the wire mesh belt (10).

5. Wire mesh belt according to any of Claims 1 to 4, **characterised in that** the reinforcement strips (20) are disposed symmetrically to the longitudinal central axis (24) of the wire mesh belt (10).

6. Wire mesh belt according to any of Claims 1 to 5, **characterised in that** slanting or wavy reinforcement strips (20) are connected to one another at their corner points (25) or vertices (29) by reinforcement strips (20) running transversely.

7. Wire mesh belt according to any of Claims 1 to 6, **characterised in that** the reinforcement strips (20) are provided on the rear side (30) of the wire mesh belt (10) with a thickening (31) of a solidifying compound (19).

## Revendications

1. Bande en tissu de fils, en particulier pour installations de transport, presses à filtres à bandes, ou similaires, les extrémités (11) de ces bandes présentant des oeillets (12) qui sont fixés par des bandes de fixation (13) en pâte durcissable, à travers lesquels sont insérés des éléments de liaison (14) allongés qui relient les extrémités (11) de la bande en tissu de fils de manière à former une bande sans fin, **caractérisée en ce que** les extrémités (11) de la bande sont renforcées sur une longueur limitée (1) par des bandes de renforcement (20) en une pâte durcissable (19), qui remplit au moins une partie des mailles (17) du tissu (21), grâce à quoi les mouvements relatifs des fils (27) du tissu sont empêchés.

2. Bande en tissu de fils selon la revendication 1, **caractérisée en ce que** la pâte durcissable (19) est une colle à deux composants à base de polyuréthane.

3. Bande en tissu de fils selon les revendications 1 ou 2, **caractérisée en ce que** les bandes de renforcement (20) forment dans le tissu (21) une grille (22) à cellules (23) triangulaires.

4. Bande en tissu de fils selon l'une des revendications 1 à 3, **caractérisée en ce que** les bandes de renforcement (20) forment des lignes sinueuses (28) dans la bande de tissu (10).

5. Bande en tissu de fils selon l'une des revendications 1 à 4, **caractérisée en ce que** les bandes de renforcement (20) sont disposées symétriquement par rapport à l'axe longitudinal médian (24) de la bande de tissu (10).

6. Bande en tissu de fils selon l'une des revendications 1 à 5, **caractérisée en ce que** les bandes de renforcement (20) s'étendant obliquement ou suivant des lignes sinueuses sont reliées les unes aux autres en leurs sommets (25, 29) par des bandes de renforcement (20) s'étendant transversalement.

7. Bande en tissu de fils selon l'une des revendications 1 à 6, **caractérisée en ce que** les bandes de renforcement (20) sont munies sur la face inférieure de la bande en tissu de fils (10) d'un épaississement (31) en pâte durcissable (19).

# FIG.2

# FIG.1

FIG.3